# EUROPEAN PATENT APPLICATION

(11) **EP 4 640 484 A1**
(43) Date of publication of application: **29.10.2025**
(21) Application number: 24172493.9
(22) Date of filing: 25.04.2024
(51) Int. Cl.: B60N 2/30, B60N 3/00, B60N 3/10

(54) **SINGLE HANDED MULTI POSITIONAL LOCKING MECHANISM**

(71) Applicant: Volvo Car Corporation, 405 31 Göteborg (SE)
(72) Inventor: Aicken, Richard, 43452 Kungsbacka (SE); Nordh, Mats, 442 44 Kungälv (SE)
(74) Representative: Nederlandsch Octrooibureau

(57) **Abstract**

The present disclosure relates to a rotation activation mechanism comprising: a release actuator; a first axle comprising a locking element fixedly attached to the first axle, the locking element configured to move between a locked position and an unlocked position; and a second axle comprising a rotation support plate fixedly coupled to the second axle, the second axle being parallel to the first axle, the rotation support plate configured to move between a folded position and an unfolded position when the the locking element is in the unlocked position; wherein when the locking element is in the locked position, the rotation support plate is fixed in the folded position or the unfolded position, and wherein a first input to the release actuator rotates the first axle which rotates the locking element from the locked position to the unlocked position; wherein a second input to the second axle rotates the rotation support plate between the folded position and the unfolded position when the locking element is in the unlocked position. The present disclosure further relates to a vehicle seat assembly including a foldable element.

## Description

### TECHNICAL FIELD

The present disclosure relates to a rotation activation mechanism, a vehicle seat assembly including a rotation activation mechanism and a vehicle in which vehicle seat assembly can be installed.

### BACKGROUND ART

Passenger seats in vehicles are designed to accommodate an adult occupant. However, an adult seat with a typical three point harness is inadequate for safety retaining children. As a result, a variety of child seats have been developed to provide safe transportation of children in vehicles. Those child seats include rearward facing child seats, forward facing child seats and booster seats, which can be fixed to a vehicle using the seatbelt or the ISOFIX system. A problem with the use of those child seats is that the child seats require stowing in, or removing from, the vehicle when an adult wishes to use the seat.

As an alternative, there is an increasing customer demand for vehicle seats that have been equipped with a child seat contained therein, commonly referred to as an integrated child seat, and which can be folded down onto the seat bottom for compact storage. This an integrated child seats typically requires of a complex folding structure, which increased manufacturing cost and operational complexity for the user to operate the child seat, requiring the user to interact with the seat in multiple locations for controlling the folding/unfolding of the child seat.

Therefore, a need exists for an improved integrated child seat.

### SUMMARY

In an aspect of the present disclosure, a rotation activation mechanism is provided. The rotation activation mechanism comprises: a release actuator; a first axle comprising a locking element fixedly attached to the first axle, the locking element configured to move between a locked position and an unlocked position; and a second axle comprising a rotation support plate fixedly coupled to the second axle, the second axle being parallel to the first axle. The rotation support plate is configured to move between a folded position and an unfolded position when the locking element is in the unlocked position. When the locking element is in the locked position, the rotation support plate is fixed in the folded position or the unfolded position. A first input to the release actuator rotates the first axle which rotates the locking element from the locked position to the unlocked position; and a second input to the second axle rotates the rotation support plate between the folded position and the unfolded position when the locking element is in the unlocked position. The present configuration provides an improved rotation activation mechanism due to the placement of the locking element and the rotation support plate. This arrangement allows unlocking the rotation activation mechanism, granting then the movement between the folded and unfolded positions, thereby minimizing the effects of unexpected folding/unfolding, protecting the rotation activation mechanism performance, and minimizing the user interaction with the rotation activation mechanism.

In an example of the present disclosure, the first input and/or the second input correspond to a manual movement. Optionally, the first input comprises a compression force in a direction perpendicular to the first axle, and the second input comprises a rotational force relative to the second axle. These two inputs can be provided by a single hand of a user, one compression movement causes to unlock the locking element and the rotational movement causes to fold/unfold the rotation support plate. By this way, the other user's hand is free.

In an example of the present disclosure, the rotation activation mechanism comprises a bracket comprising a first end coupled to the release actuator and a second end coupled to the first axle, wherein application of a force to a first end of the bracket moves a second end of the bracket causing the rotation of the first axle. By using a bracket as an intermediate component between the release actuator and the first axle, the release actuator is fastened to the first axle, and the force applied to the first end can be transformed into rotational movement which rotates the first axle.

In an example of the present disclosure, the rotation activation mechanism comprises a first spring attached to the bracket and configured to return the locking element to the locked position.

In an example of the present disclosure, the rotation activation mechanism comprises a second spring attaching the locking element to the rotation support plate and configured to return the rotation support plate to the folded position.

Springs have the benefit of absorbing shock, distributing forces evenly across a structure and/or providing power for a mechanism. For example, the first and/or second spring can be a coil spring.

In an example of the present disclosure, the rotation activation mechanism comprises a rotation positioning mechanism rotatably coupled to the second axle. The rotation positioning mechanism comprises: a through hole through which the second axle extends; a first arm pin and a second arm pin for engaging the locking element; and a track. In the folded position, the locking element engages the first arm pin, and in the unfolded position, the locking element engages the second arm pin. The track partially extends around the through hole and adjacent to the rotation support plate. The rotation support plate moves along the track between the folded position and the unfolded position. This arrangement limits or restricts the movement of the rotation support plate, preventing an excessive rotation which may damage the rotation activation mechanism. Moreover, this restriction of the movement of the rotation support plate in combination with the arm pins, allows predefining the folded position and the unfolded position and ensuring the locked position while the locking element engages any of the arm pins.

In an example of the present disclosure, an extended portion of the rotation support plate moves along the track. The extended portion ensures maintaining the rotation support plate within the track.

In an example of the present disclosure, the rotation activation mechanism comprises a quick release plate rotatably attached to the second axle and configured to detachably engage a passenger seat. Such an arrangement allows that the rotation activation mechanism can be assembled and disassembled from the passenger seat as desired.

In an example of the present disclosure, the rotation activation mechanism comprises an electrical signal detector configured to detect whether the rotation support plate is in the folded position or the unfolded position. By detecting whether the rotation support plate is in the folded position or the unfolded position, warning means can alert a user if the rotation support plate is not securely unlocked in the folded position or the unfolded position, thereby preventing an unintentional folding/unfolding.

In a further aspect of the present disclosure, a vehicle seat assembly is provided. The vehicle seat assembly includes a foldable element. The vehicle seat assembly is movable between a folded position for a passenger to be seated in a seat cushion of the vehicle seat assembly and rest against a back cushion of the vehicle seat assembly, and an unfolded position for accommodating the foldable element. The vehicle seat assembly further comprises: a rotation activation mechanism according to any preceding claim; a back portion fixedly coupled to the second axle and configured to transmit the first input to the release actuator and the second input to the second axle, wherein the back portion includes an exterior side for the seat cushion; and a base portion. The foldable element can be a child seat, a drink holder, a container, a table, etc.

In an example of the present disclosure, the foldable element of the vehicle seat assembly is a child seat, wherein the base portion comprises a seat base; and wherein the back portion comprises: a seat back comprising a seat back; and a headrest adjustably coupled to the seat back and configured to transmit the first input to the release actuator. This arrangement connects a child seat to a structure of a vehicle seat, instead of using seat belts, latches, or other systems that are sometimes difficult to use and can be unreliable (particularly if not arranged correctly or arranged by someone unfamiliar with child seats). By having a child seat that is integrated into a passenger seat of a vehicle; complex detachable child seats with complementary attaching elements can be avoided, thereby avoiding any unsafe connections or issues with the detachable seats. Moreover, the arrangement provides a child seat at hand when needed while maximizing passenger seating area when the child seat is not needed.

In an example of the present disclosure, the vehicle seat assembly further comprises: a headrest guide attached to the seat back; a headrest rail attached to the headrest and movable along the headrest rail for adjusting a distance between the headrest and the seat back. This arrangement facilitates the adjustment of the head in accordance with the growth and age of the child, thereby improving safety of the child when sitting on the child seat.

In an example of the present disclosure, the first input comprises a compression of the headrest and the second input comprises a rotation of the headrest relative to the base portion. Since the headrest is configured to transmit the first input to the release actuator, a user preforming a compression of the headrest will unlock the locking element allowing the rotation support plate to move between the folded the unfolded position. If the user then perform a rotation of the back portion while holding or graving the headrest (i.e. the second input), since the back portion is configured to transmit the second input to the second axle, the rotation support plate will move between the folded the unfolded position. Consequently, the user performing such inputs can easily fold and unfold the child seat using only one hand, while the other hand can be available for other things such as carrying a baby.

In a further aspect of the present disclosure, a vehicle is provided. The vehicle comprises a plurality of passenger seats, wherein at least one of the plurality of passenger seats comprises a pair of elongated support bars, each elongated support bar comprising: a quick release pivot mount for detachably engaging in the quick release plate of the rotation activation mechanism.

The rotation activation mechanism may include a number of additional features and structures. These features and structures may be included in various combinations that include some of these features and structures, all of these features and structures, or one of these features and structures.

### BRIEF DESCRIPTION OF DRAWINGS

The present disclosure will be described in more detail below, with reference to preferred embodiments as shown in the drawings attached, in which:
FIG. 1A and FIG. 1B show a perspective view of a rotation activation mechanism according to an exemplary embodiment of the invention;
FIG. 2A and FIG. 2B show an schematic view of a locked position and an unlock position related to a rotation activation mechanism according to an exemplary embodiment of the invention;
FIG. 3 shows an schematic view of a part of a rotation activation mechanism;
FIG. 4A, 4B, 4C and 4D illustrate the folded position and the unfolded position of a foldable element included in a vehicle seat assembly; and
FIG. 5 shows a rear side passenger structure of a vehicle.

### DESCRIPTION OF EMBODIMENTS

The aspects of the present disclosure will now be described more fully hereinafter with reference to the accompanying drawings, in which certain embodiments of the disclosure are shown. The use of the same reference numerals may indicate similar or identical items. Various embodiments may utilize elements and/or components other than those illustrated in the drawings, and some elements and/or components may not be present in various embodiments. Elements and/or components in the figures are not necessarily drawn to Scale. Throughout this disclosure, depending on the context, singular and plural terminology may be used interchangeably.

In the present disclosure, it should be understood that a child safety seat can also be called infant safety seat, child restraint system, child seat, baby seat, or booster seat.

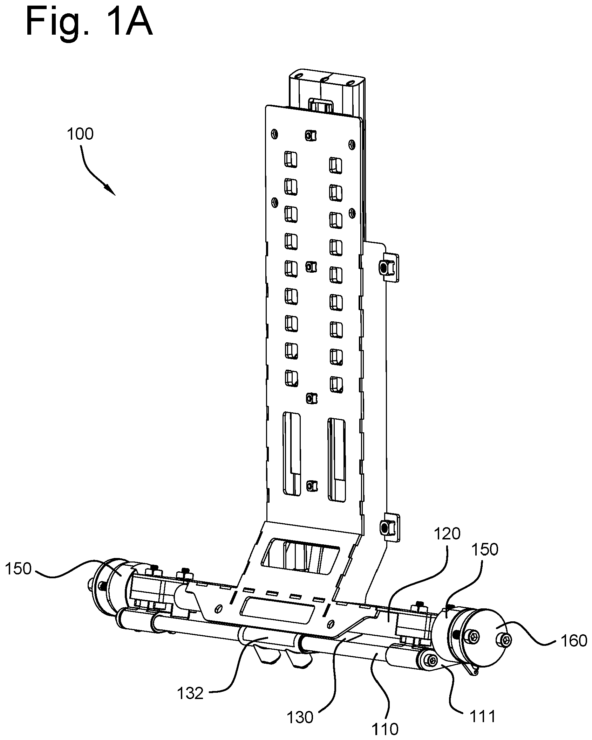

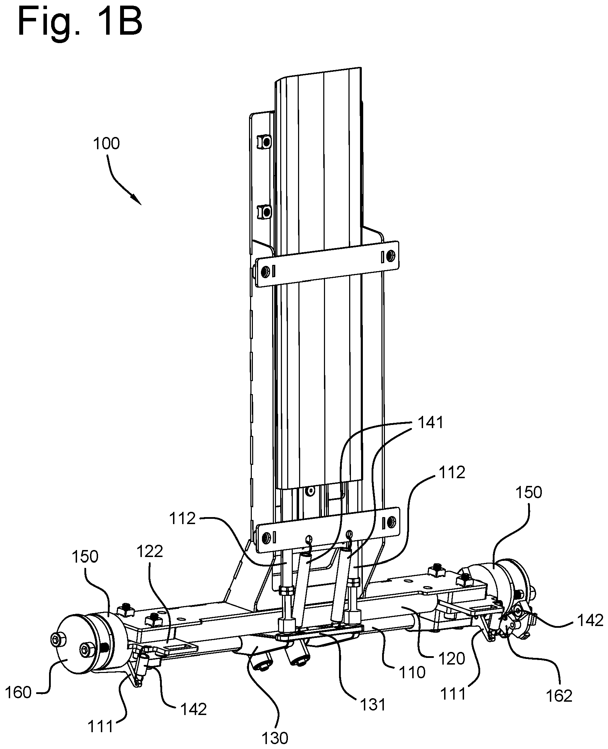

FIG. 1A and FIG. 1B show a perspective view of the rotation activation mechanism 100. The rotation activation mechanism 100 includes a release actuator 112, a first axle 110 and a second axle 120 parallel to the first axle 110.

The first axle 110 comprises a locking element 111 fixedly attached to the first axle 110. By fixedly attaching the locking element 111 to the first axle 110, any rotational movement of the first axle 110 is transmitted to the locking element 111, thereby rotating or moving the locking element 111 between a locked position and an unlocked position.

The first axle 110 can have a smaller diameter than the second axle 120. By having the second axle 120 a greater diameter than the first axle 110, the second axle 120 can support more weight and forces than the first axle, making the second axle suitable to be connected to an external element as a passenger seat (not shown). Optionally, both axles can have similar diameter. Alternatively, the first axle can have a greater diameter than the second axle.

Optionally, the rotation activation mechanism 100 can comprise a bracket 130. The bracket 130 includes a first end 131 coupled to the release actuator 112 and a second end 132 coupled to the first axle 110. For example, the first end 131 can be a flat plate to which the release actuator 112 is attached and the second end 132 can have a cylindrical shape through which the first axle 110 is coupled.

The second axle 120 comprises a rotation support plate 122 fixedly coupled to the second axle 120. By fixedly attaching the rotation support plate 122 to the second axle 120, any rotational movement of the second axle 120 is transmitted to the rotation support plate 122, thereby rotating or moving the rotation support plate 122 between a folded position and an unfolded position when the locking element 111 is in the unlocked position.

In case the locking element 111 is in the locked position, the rotation support plate 122 is unable to be moved. That is, when the locking element 111 is in the locked position, the rotation support plate 122 is fixed in the folded position or the unfolded position, thereby preventing any unintentional folding/unfolding of the rotation support plate 122.

Optionally, the rotation activation mechanism 100 can further comprise one or more springs, for example a first spring 141 and/or a second spring 141. The first spring 141 can be attached to the bracket 130 and be configured to return the locking element 110 to the locked position. The second spring 132 can attach the locking element 111 to the rotation support plate 122 and be configured to return the rotation support plate 122 to the folded position. Alternatively, the second spring 132 can be configured to return the rotation support plate 122 to the unfolded position.

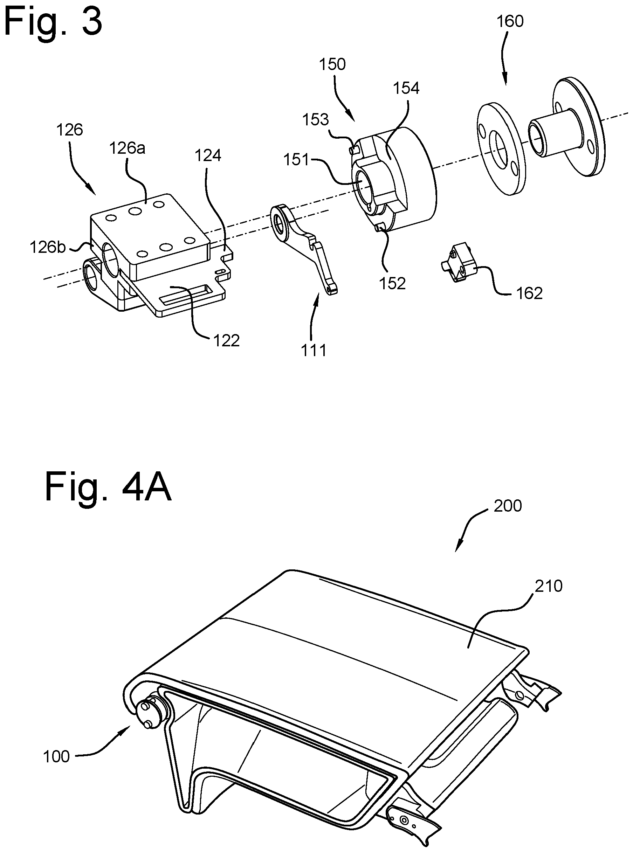

The rotation activation mechanism 100 can also comprise a rotation positioning mechanism 150 rotatably coupled to the second axle 120. An exemplary rotation positioning mechanism 150 is described in relation to FIG. 3.

The rotation activation mechanism 100 comprises a quick release plate 160 rotatably attached to the second axle 120 and configured to detachably engage a passenger seat. The quick release plate 160 is attachable to a passenger seat (not shown) by using attaching means, for example screws.

The rotation activation mechanism 100 comprises an electrical signal detector 162 configured to detect whether the rotation support plate 122 is in the folded position or the unfolded position. When the rotation support plate 122 is in the folded position or the unfolded position, the locking element 111 is in the locked position, thereby the electrical signal detector 162 can detect whether the locking element 111 is in the locked position. In case that the rotation support plate 122 is in any of the folded position and the unfolded position, the electrical signal detector can transmit an electrical signal, which can be converted into any other signal though an interphase, such that a user can recognize whether the rotation support plate 122 is securely folded or unfolded.

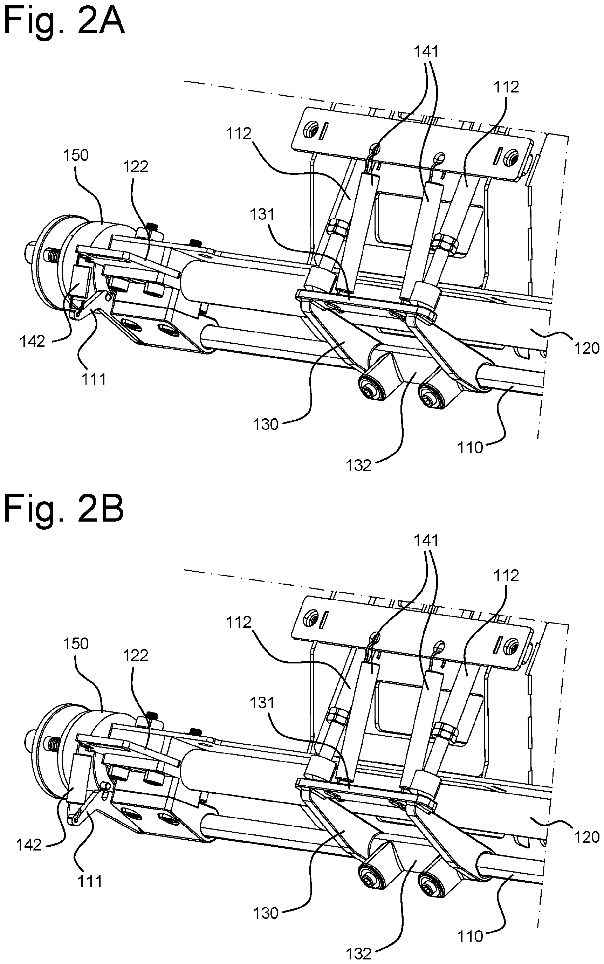

FIG. 2A and FIG. 2B illustrate the rotation or movement of the locking element 111 between a locked position and an unlocked position. FIG. 2A shows the locking element 111 in the locked position and FIG. 2B shows the locking element 111 in the unlocked position.

A first input to the release actuator rotates the first axle which rotates the locking element from the locked position to the unlocked position. For example, when the first input is applied to the release actuator 112, the release actuator 112 transfers the input to the first end 131 of the bracket 130. Since the second end 132 of the bracket 130 is coupled to the first axle 110, the first input is transferred to the first axle 110 in form of a rotational movement, thereby rotating the first axle 110, and in turn, rotating the locking element 111 from the locked position to the unlocked position.

The first input can comprise a compression force in a direction perpendicular to the first axle 110. That is, the compression force is a force applied in a direction perpendicular to an axial direction along which the first axle extends.

In case the locking element 111 is in the unlocked position and a second input to the second axle 120 is applied, the second input to the second axle 120 rotates the rotation support plate 122 between the folded position and the unfolded position. The second input can comprise a rotational force relative to the second axle 120. That is, the second input comprises a force that causes the second axle 120 to rotate about its longitudinal axis.

Optionally, the first input and/or the second input can be performed by a hand of a user. By performing the first input and second input with one hand, the user can lock/unlock and fold/unfold the different components of the rotation activation mechanism 100 while using the other hand for another purpose, for example, carrying a child.

FIG. 3 shows an exemplary part of the rotation activation mechanism 100. The rotation positioning mechanism 150 comprises a through hole 151 through which the second axle 120 extends, a first arm pin 152, a second arm pin 153 and a track 154.

As previously described, the rotation support plate 122 is fixedly coupled to the second axle 120. For example, a coupling plate 126 can be used to fixedly coupling the rotation support plate 122 to the second axle 120. The coupling plate 126 can comprise an upper coupling plate 126a and a lower coupling plate 126b. The upper coupling plate 126a and the lower coupling plate 126b can have a shape such that when the upper coupling plate 126a is placed on the lower coupling plate 126b, an aperture is formed through which the second axle extends 120 and is fixedly coupled to the coupling plate 126, for example, by using screws or any other coupling means. The coupling plate 126 can further comprise a space between a part of upper coupling plate 126a and a part of the lower coupling plate 126b for coupling to the rotation support plate 122. Although, in the example of FIG. 3, the coupling plate 126 is disclosed for coupling the rotation support plate 122 to the second axle 120, any other element can be used. Alternatively, the rotation support plate 122 can be directly coupled to the second axle 120. The rotation support plate 122 comprises an extended portion 124 for moving along the track 154.

The first arm pin 152 and the second arm pin 153 are configured to engage the locking element 111. In the folded position, the locking element 111 engages the first arm pin 153, and in the unfolded position, the locking element 111 engages the second arm pin 154. As shown in FIG 2A, when the locking element 111 is in the locked position, the locking element 111 is engaged with one of the arm pins (for example, the first arm pin 152) of the rotation activation mechanism 150, and thereby rotation of the second axle 120 is prevented. As shown in FIG. 2B, when the locking element 111 is in the unlocked position, the locking element 111 is not engaged with the arm pin of the rotation activation mechanism 150, and thereby rotation is the second axle 120 is allowed. Optionally, the rotation positioning mechanism 150 can comprise one or more third arm pins (not shown) for engaging the locking element 111 in one or more intermediate positions between the folded position and the unfolded position.

As shown in FIG. 3, the track 154 partially extends around the through hole 151 and is adjacent to the rotation support plate 122 such that the extended portion 124 of the rotation support plate 122 is movable along the track 154 between the folded position and the unfolded position.

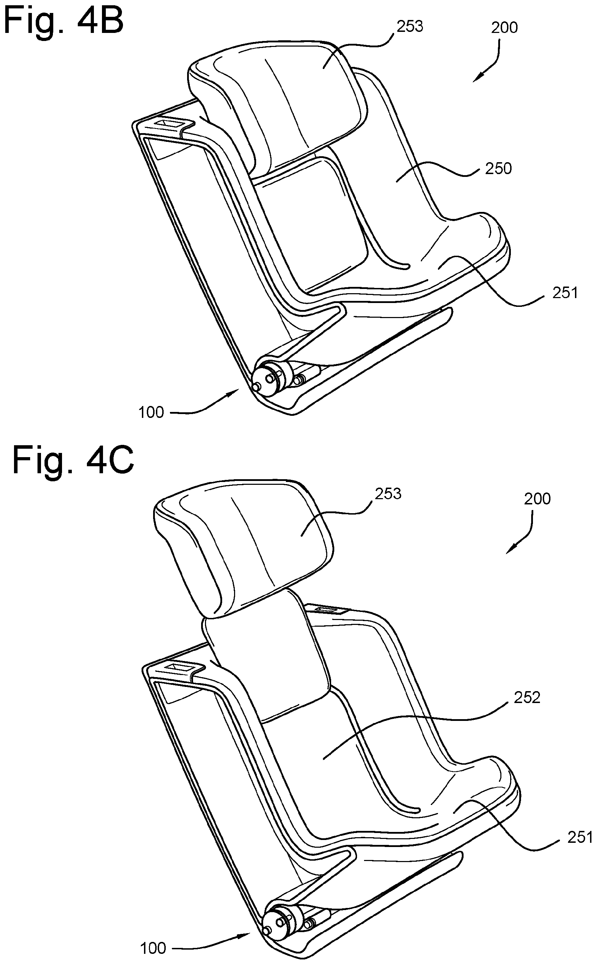

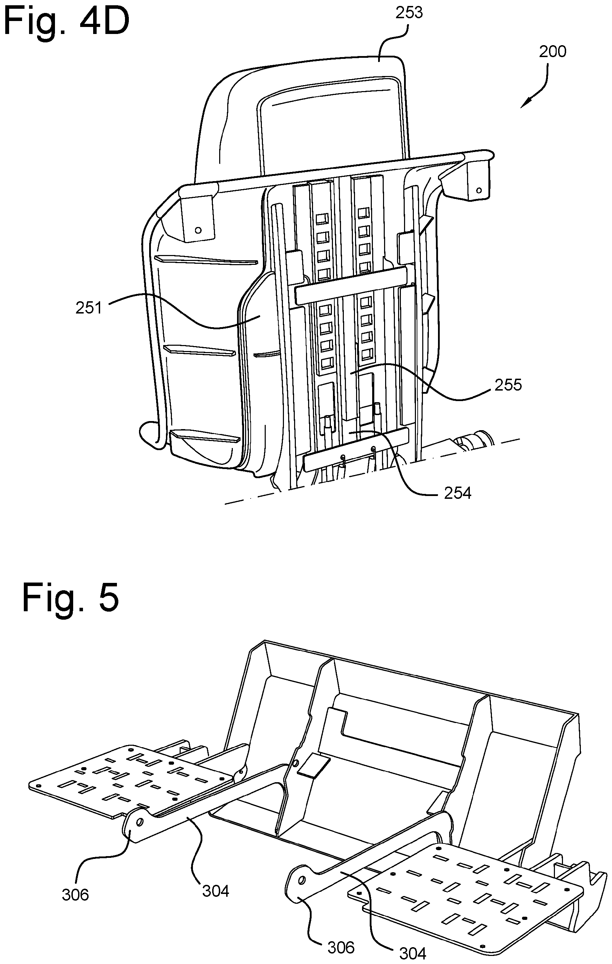

FIGS. 4A, 4B, 4C and 4D illustrate the folded position and the unfolded position of a foldable element included in a vehicle seat assembly 200. The vehicle seat assembly 200 comprises a foldable element. For convenience, the vehicle seat assembly is described hereinafter with the foldable element being a child seat. In alternative examples, the foldable element can be a drink holder, a container, a table, and the like.

The vehicle seat assembly 200 comprises a rotation activation mechanism 100 (for example, the rotation activation mechanism 100 of FIG. 1 to FIG. 4), a back portion and a base portion. The back portion is fixedly coupled to the second axle 120 and configured to transmit the first input to the release actuator 112 and to transmit the second input to the second axle 120. The back portion includes an exterior side 210 for a seat cushion.

In FIG. 4A, the vehicle seat assembly 200 is in the folded position. In the folded position, a passenger can be seated on the seat cushion (not shown) of the vehicle seat assembly and rest against a back cushion (not shown) of the vehicle seat assembly 200. In FIG. 4B and 4C, the vehicle seat assembly 200 is in the unfolded position. In the unfolded position, a child can be seated in the child seat 250. The back portion comprises a seat back 252 and a seat cushion for a child to be seated on and rest against, and a headrest 253 for accommodating a head of the child.

The headrest 253 is adjustably coupled to the seat back 252 and configured to transmit the first input to the release actuator 112. The base portion comprises a seat base 251. The seat back 252 comprises an interior side.

FIG. 4D illustrates the rear side of the unfolded position of a foldable element included in a vehicle seat assembly 200. The vehicle seat assembly 200 comprises a headrest guide 254 and a headrest rail 255.

The headrest guide 254 is attached to the seat back 252. The headrest rail 255 is attached to the headrest 253 and is movable along the headrest rail 255 for adjusting a distance between the headrest 253 and the seat back 252. FIG. 4C shows the vehicle seat assembly 200 in which the headrest 253 is extended with respect to the seat back 252.

FIG. 5 shows a rear seat passenger structure of a vehicle in which up to three passengers can be seated, one on the left side, one on the right side and one in the center side. The center side is pre-configured to comprise a pair of elongated support bars 304 in which a child seat (for example, the child seat 250 of FIG. 4A to FIG. 4D) can be engaged. It should be understood that instead of a child seat any other foldable element can be used.

Each elongated support bar 304 comprises a quick release pivot mount 306 for detachably engaging in the quick release plate 160 of the rotation activation mechanism 100 included in the child seat 250. The quick release plate 160 and the quick release pivot mount 306 can be attached using attaching means, like screws.

Although in FIG. 5, the elongated support bars 304 are configured to be positioned on the center side, any other position is available. For example, the elongated support bars 304 can be placed on the left, the right and/or the center passenger rear seats and/or on the copilot seat, on in any combination therein.

The present disclosure must not be regarded as being limited to the preferred embodiments described above; a number of further variants and modifications are feasible without departing from the scope of the patent claims.

## Claims

1. A rotation activation mechanism (100) comprising:
- a release actuator (112);
- a first axle (110) comprising a locking element (111) fixedly attached to the first axle (110), the locking element (111) configured to move between a locked position and an unlocked position; and
- a second axle (120) comprising a rotation support plate (122) fixedly coupled to the second axle (120), the second axle (120) being parallel to the first axle (110) , the rotation support plate (122) configured to move between a folded position and an unfolded position when the the locking element (111) is in the unlocked position;
- wherein when the locking element (111) is in the locked position, the rotation support plate (122) is fixed in the folded position or the unfolded position, and
- wherein a first input to the release actuator (112) rotates the first axle (110) which rotates the locking element (111) from the locked position to the unlocked position;
- wherein a second input to the second axle (120) rotates the rotation support plate (122) between the folded position and the unfolded position when the locking element (111) is in the unlocked position.

2. The rotation activation mechanism of claim 1, wherein the first input and/or the second input correspond to a manual movement.

3. The rotation activation mechanism of any preceding claim, wherein the first input comprises a compression force in a direction perpendicular to the first axle (110) , and wherein the second input comprises a rotational force relative to the second axle (120).

4. The rotation activation mechanism of any preceding claim, further comprising:
- a bracket (130) comprising a first end (131) coupled to the release actuator (112) and a second end (132) coupled to the first axle (110), wherein application of a force to the first end (131) of the bracket (130) moves the second end (132) of the bracket (130) causing the rotation of the first axle (110).

5. The rotation activation mechanism of claim 4, further comprising:
- a first spring (141) attached to the bracket (130) and configured to return the locking element (111) to the locked position.

6. The rotation activation mechanism of any preceding claim, further comprising:
- a second spring (142) attaching the locking element (111) to the rotation support plate (122) and configured to return the rotation support plate (122) to the folded position.

7. The rotation activation mechanism of any preceding claim, further comprising a rotation positioning mechanism (150) rotatably coupled to the second axle (120), the rotation positioning mechanism (150) comprising:
- a through hole (151) through which the second axle (120) extends;
- a first arm pin (152) and a second arm pin (153) for engaging the locking element (111), wherein in the folded position, the locking element (111) engages the first arm pin (152), and in the unfolded position, the locking element (111) engages the second arm pin (153); and
- a track (154) partially extending around through hole (151) and adjacent to the rotation support plate (122), wherein the rotation support plate (122) moves along the track (154) between the folded position and the unfolded position.

8. The rotation activation mechanism of claim 7, wherein an extended portion (124) of the rotation support plate (122) moves along the track (154).

9. The rotation activation mechanism of any preceding claim, further comprising:
- a quick release plate (160) rotatably attached to the second axle (120) and configured to detachably engage a passenger seat.

10. The rotation activation mechanism of any preceding claim, further comprising:
- an electrical signal detector (162) configured to detect whether the rotation activation mechanism is in the folded position or the unfolded position.

11. A vehicle seat assembly (200) including a foldable element,
- wherein the vehicle seat assembly (200) is movable between a folded position for a passenger to be seated in a seat cushion of the vehicle seat assembly and rest against a back cushion of the vehicle seat assembly, and an unfolded position for accommodating the foldable element;
- wherein the vehicle seat assembly comprises:
∘ a rotation activation mechanism (100) according to any preceding claim;
∘ a back portion fixedly coupled to the second axle and configured to transmit the first input to the release actuator and the second input to the second axle, wherein the back portion includes an exterior side for the seat cushion; and
∘ a base portion,
- wherein the foldable element is a child seat, a drink holder, a container or a table,

12. The vehicle seat assembly of claim 11 in which the foldable element is a child seat,
- wherein the base portion comprises a seat base (251); and
- wherein the back portion comprises:
∘ a seat back (252) comprising an interior side; and
∘ a headrest (253) adjustably coupled to the seat back (252) and configured to transmit the first input to the release actuator (112).

13. The vehicle seat assembly of claim 12, further comprising:
- a headrest guide (254) attached to the seat back (252);
- a headrest rail (255) attached to the headrest (253) and movable along the headrest rail (254) for adjusting a distance between the headrest (253) and the seat back (252).

14. The vehicle seat assembly of claim 13, wherein the first input comprises a compression of the headrest (253) and the second input comprises a rotation of the headrest (253) relative to the base portion.

15. A vehicle comprising a plurality of passenger seats, wherein at least one of the plurality of passenger seats comprises a pair of elongated support bars (304), each elongated support bar (304) comprising:
- a quick release pivot mount (306) for detachably engaging in the quick release plate (160) of the rotation activation mechanism (100) according to claim 9.
